# EUROPÄISCHE PATENTSCHRIFT

(11) **EP 0 878 808 B1**
(45) Veröffentlichungstag und Bekanntmachung des Hinweises auf die Patenterteilung: **21.04.2004**
(21) Anmeldenummer: 98101947.4
(22) Anmeldetag: 05.02.1998
(51) Int. Cl.: H01F 27/06, H02B 7/06, E04H 5/04

(54) **Elektrische Umspannstation**
Electric transformer station
Station de transformation électrique

(30) Priorität: 14.05.1997 DE 19719963; 27.06.1997 DE 19727299
(43) Veröffentlichungstag der Anmeldung: 18.11.1998
(73) Patentinhaber: Betonbau GmbH, D-68753 Waghäusel (DE)
(72) Erfinder: Primus, Illo-Frank, Dr.-Ing., 76327 Pfinztal 1 (DE)
(74) Vertreter: Hiebsch, Gerhard F., Dipl.-Ing.

(56) Entgegenhaltungen:
- EP-A- 0 671 795
- DE-U- 1 823 755
- DE-U- 7 609 593
- DE-U- 29 606 617

## Beschreibung

Die Erfindung betrifft eine elektrische Umspannstation mit wenigstens einen Transformator sowie zumindest eine elektrische Schaltanlage aufnehmenden Räumen nach dem Oberbegriff des unabhängigen Patentanspruchs.

Eine derartige Umspannstation ist der EP 0 671 795 Al zu entnehmen anhand einer Freiluft-Umspannstation mit einer als Betongehäuse ausgebildeten Kabine, die in ein, ins Erdreich versenktes Abteil zur Aufnahme eines Transformators sowie in ein aus dem Erdreich herausstehendes, zumindest eine elektrische Schaltanlage enthaltendes zweites Abteil unterteilt ist. Die genannte Kabine wird durch ein Dach abgedeckt und umfasst Lüftungsmittel, die eine Kühlluftzirkulation im Innern der Abteile ermöglichen. Das erste Abteil enthält einen vom Transformator eingenommenen und von einer -- als Bestandteil der Kabine ausgebildeten herausnehmbaren sowie in einer horizontalen Ebene etwa auf Erdreichniveau angeordneten -- einen zum Dach hin vertikalen, der Höhe der Station über Erdreich entsprechenden Abstand aufweisenden Bedienungsplattform abgedeckten Bereich.

Das zweite Abteil ist über einem zweiten Bereich des ersten Abteils angeordnet, der zum Durchführen der durch in der versenkten Wand der Kabine ausgebildete Öffnungen hindurchgelegte Anschlusskabel dient. Die Bedienungsplattform verläuft rechtwinklig zu einer Zugangstür zum zweiten Abteil, und die Tragmittel der Schaltanlagen sind längs der Bedienungsplattform an der Unterseite des zweiten Abteils angeordnet; sie liegen auf ortsfesten -- mit den einander gegenüberliegenden Seitenwänden der Kabine fest verbundenen - - Stützböcken auf. Ein Längsträger ist parallel zu den Tragmitteln längs des unteren Rands der Bedienungsplattform angeordnet, um ein Haltemittel für die Tür und die herausnehmbaren Platten der Bedienungsplattform zu bilden.

Die Schrift zum DE-U-92 14 978 offenbart eine Umspannstation aus einem seiner Kontur nach quaderförmigen, monolithisch aus Wänden und Bodenplatte gegossenen Bauwerk, das auf die Rasenkante aufgesetzt und mit einer Betonplatte als Dach versehen wird.

Die DE-PS 22 43 383 beschreibt einen querschnittlich kreisförmigen druckfesten Kessel für Unterfluraufstellung, d. h. zum völligen Versenken im Erdreich. In ihn wird zuerst der Transformator eingelassen und mit einem Stahldeckel abgedeckt. Auf letzterem stellt man dann einen Hochspannungsteil ab; über diesem -- und unterhalb eines mit der Rasenkante fluchtenden Kesseldeckels -- wird an der Wand ein Niederspannungsteil befestigt.

In Kenntnis dieses Standes der Technik hat sich der Erfinder das Ziel gesetzt, eine Umspannstation der eingangs erwähnten Art zu schaffen, deren Grundris möglichst klein ist und die auch nur mit geringer Einbautiefe in den Boden eingelassen werden muß.

Zur Lösung dieser Aufgabe führt die Lehre des unabhängigen Anspruches; die Unteransprüche geben günstige Weiterbildungen an.

Die erfindungsgemäße, von außen bedienbare Transformatorenstation zeichnet sich dadurch aus, dass in dem Spannungsraum des monolithisch gegossenen Bauwerkes zumindest eine (MS-) Mittelspannungsschaltanlage und eine (NS-) Niederspannungsverteilung angeordnet sind sowie als Auflageeinrichtung ein den Transformatorenraum überspannender, gebäudeseitig festgelegter Zwischenboden berstsicher ausgebildet und mit wenigstens einem Düsenfenster nahe der Mittelspannungsanlage versehen ist; die Luftdurchtrittsöffnung/en eine Einbautiefe für die Umspannstation bestimmt/bestimmen. Die Auflageeinrichtung ist bevorzugt entweder als Fläche mit rostartig verteilten Düsenfenstern ausgebildet, die über Stützelemente im Bodenbereich der Umspannstation festgelegt ist, oder als kompakter Zwischenboden gestaltet, der oberhalb des Transformators entsprechenden Elementen des Umspannstationsgebäudes aufliegt.

Dank dieser Maßgabe kann nun der Grundriss der Transformatorenstation erheblich kleiner gehalten werden als bei den bisher bekannten Kompaktstationen. Zudem soll die Eingrabtiefe der Transformatorenstation minimiert sein, d.h. diese soll möglichst nicht tiefer als 1,25 m in den Boden abgesenkt werden, da nach den einschlägigen Unfallverhütungsvorschriften (UVV) hierbei noch ein vertikaler Erdaushub möglich ist. Die maximale Einbautiefe liegt bei 1,75 m, da nach UVV an den noch bis 1,25 m vertikalen Erdaushub eine Anböschung unter 45° erlaubt ist. Eine tiefere Erdeindringung wäre stets von der Sole anzuböschen und ergäbe große Erdaushubmassen. Wird die Höhe über Erdreich kleiner 1,65 m gewählt, so verbleibt es bei der Höhe üblicher Kompaktstationen; die erfindungsgemäße Transformatorenstation kann so durch Öffnen normaler Türen zugänglich bleiben - sog. Winkeldeckel wie bei Tiefstationen bedarf es nicht. Somit entsteht ein leichter Zugang zum Schalten an der MS- und der NS-Anlage.

Zur Gewährleistung der Bedienungssicherheit und Passantensicherheit wird eine Zwischenbodenkonstruktion zwischen Untergeschoß und Obergeschoss einmontiert, die gegen die durch die MS-Anlage nach unten ausgestoßene Druckwelle druckfest konstruiert ist und ein Düsenfenster hinter der Mittelspannungsschaltanlage enthält, das die heißen Gase abkühlt. Günstigerweise vermindert sich erfindungsgemäß der freie Querschnitt des Düsenfensters vom Transformator weg gerichtet, wobei dieses Düsenfenster von wenigstens einem Kühlgitter durchgriffen wird, das an Kabeldurchführungen angepaßt zu werden vermag.

Nach einem weiteren Merkmal der Erfindung enthält die Zwischendecke vor der Mittelspannungsschaltanlage eine Zuluftöffnung, die mit einer angelenkten Klappe im Überdruckfall im Traforaum die Zwischendecke störlichtbogenfest abschließt; die Zuluftzuführung ist in der Mittelspannungstür angeordnet und der Abluftaustrag in der Stationswand oder in der Niederspannungstür.

Um einen einfachen Einbau des berstfesten Zwischenbodens zu ermöglichen, ruht dieser auf von Wänden des Bauwerks abragenden Einbauteilen; er ist insbesondere auf Betonkonsolen aufgelegt, die monolithisch in das Bauwerk eingegossen sind. Die Möglichkeit, statt der Betonkonsolen Stahlwinkel oder Aluwinkel einzusetzen, ist ebenfalls gegeben.

Die erfindungsgemäße Zwischendecke bietet Aussparungen für den Anschluß der Mittelspannungskabel und den Anschluß der Niederspannungskabel an, und der in seiner Dimension auf das jeweilige Schalterfabrikat abgestimmte Durchbruch für die Mittelspannungsanlage wird von dem geschlossenen Mittelspannungsschrank abgedeckt.

Nach einem weiteren Merkmal der Erfindung sind in der Zwischendecke Durchführungen für die Niederspannungskabel vorgesehen und mittels an die Kabeldurchmesser anpaßbarer verschraubbarer Holzabdeckplatten druckfest abgeschlossen.

Als günstig hat es sich erwiesen, den Zwischenboden als Teil eines gesonderten Einbauelements etwa rechtwinkeligen Längsschnittes zu konzipieren und an den Zwischenboden ein vertikal gerichtetes Wandteil zur Aufnahme der Niederspannungsverteilung anzuformen. Dieses Wandteil schließt bevorzugt an die Innenseite der Dachplatte an.

Im Rahmen der Erfindung liegt es, daß der Transformator dem Zwischenboden untergehängt ist und mit ihm eine Transporteinheit bildet. Dazu bietet der Zwischenboden bevorzugt vier Befestigungselemente -- wie Hülsen, vor allem Schraubhülsen -- an, die das Gewicht des Transformators über mit dem Transformator, vorzugsweise dem Fahrgestell des Transformators verbundene Tragstäbe oder Zugbänder aufnehmen; der Zwischenboden wird mit aufmontierter Mittelspannung und Niederspannung sowie dem unten angehängten -- über Kabel od.dgl. mit den Mittelspannungs- und Niederspannungseinrichtungen verbundenen -- Transformator im Werk in den Stationskörper einmontiert und dann auf den Konsolen des Gehäuses abgelegt. Der Transformator ist an den Befestigungspunkten mittels der beschriebenen Konstruktion um etwa 2 cm absenkbar, so daß er nach dem Einbringen mit seinem Gewicht auf der Bodenplatte der Raumzelle bzw. des Bauwerkes ruht.

Der bevorzugt aus Beton hergestellte Zwischenboden weist Transportanker einer Tragfähigkeit auf, die das Gesamtgewicht von Zwischenboden und MS-Anlage und NS-Anlage samt Transformator aufnehmen.

Oberhalb des Zwischenbodens sind erfindungsgemäß frontseitig angeordnete ein- oder mehrflügelige Stationstüren vorgesehen, die der Niederspannungsverteilung gegenüber angeordnet sind und Lüftungslamellen aufweisen. Ebenfalls oberhalb des Zwischenbodens werden seitlich ein- oder mehrflügelige Stationstüren angeordnet, die der Mittelspannungsschaltanlage gegenüberstehen und auch mit Lüftungslamellen versehen sind.

Erfindungsgemäß ist unterhalb der Mittelspannungstür und unterhalb der Niederspannungstür eine abmontierbare und gegen Wasser abdichtbare Platte vor einer Durchgriffsöffnung zur Kabelmontage angeordnet.

Nach einem anderen Merkmal der Erfindung ist die Bodenplatte des seitlich und bodenwärts geschlossenen Transformatorenraumes kürzer als der Zwischenbodenbereich und ein Wandteil des Transformatorenraums ist unter Zwischenschaltung einer geneigten Pultfläche an die darüber anschließende Wand angefügt, die in Abstand zum anderen Wandteil außerhalb dessen verläuft.

Das Stationsgehäuse enthält also mindestens ein abgeschrägtes Außenwandelement, in das Kabeldurchführungen beispielsweise mit einem, zur Gehäusewand winklig angeordneten Rohrstück wasserdicht einbetoniert werden können, so daß die Kabel unter einem Winkel in das Gebäude eingeschoben zu werden vermögen.

Weitere günstige Ausgestaltungen der Erfindung und Vorteile dazu sind die folgenden:
- die Kabelverbindungen zwischen Transformator und Mittelspannung sowie zwischen Transformator und Niederspannung werden bereits im Werk innerhalb der Station durch flexible Kabel mit berührungssicheren Endverschlüssen hergestellt;
- es werden vornehmlich gasgekapselte Mittelspannungsanlagen eingesetzt;
- bei Einsatz von vier Mittelspannungsfeldern mißt die Stationslänge des Körpers ≤ 2 m;
- bei Einsatz von drei Mittelspannungsfeldern beträgt die minimale Stationslänge etwa 1,60 m;
- bei einer Stationslänge von 1,80 m oder länger ist ein 630-KVA-Transformator, bei einer Stationslänge von 1,60 m ein 400-KVA-Transformator einsetzbar;
- die Betonauffangwanne, also der untere Bereich des Bauwerkes, erfüllt ohne weiteres die Anforderungen des Wasserhaushaltsgesetzes bezüglich des Rückhaltens von Transformatorenöl;
- die Umformstation kann als Basiselement -- oder Fundament -- für Aufsatzteile wie Lampen, Absorbereinrichtungen od.dgl. dienen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1,9,17:: die niederspannungsseitige Frontansicht einer teilweise unterirdischen Transformatorenstation mit übereinander angeordneten Kammern für Transformator, Mittelspannungsschaltanlage und Niederspannungsverteilung;
- Fig. 2,10,18:: die mittelspannungsseitige Seitenansicht der Transformatorenstation nach Fig. 1 bzw. 9 bzw. 17;
- Fig. 3,11,19:: eine weitere Seitenansicht der Transformatorenstation der Fig. 1 bzw. 9 bzw. 17;
- Fig. 4,12,20:: eine Schrägsicht auf die Transformatorenstation der Fig. 1 bzw. 9 bzw. 17;
- Fig. 5,13,21:: den vertikalen Längsschnitt durch die Transformatorenstation der Fig. 1 bis 4 bzw. 9 bis 12 bzw. 17 bis 20;
- Fig. 6,14,22:: einen Querschnitt durch die Transformatorenstation der Fig. 1 bis 4 bzw. 9 bis 12 bzw. 17 bis 20;
- Fig. 7,15,23:: einen Horizontalschnitt durch die untere Kammer mit Transformator der Transformatorenstation nach Fig. 1 bis 4 bzw. 9 bis 12 bzw. 17 bis 20;
- Fig. 8,16,24:: einen Horizontalschnitt durch die obere Kammer der Transformatorenstation der Fig. 1 bis 4 bzw. 9 bis 12 bzw. 17 bis 20;
- Fig. 25:: einen Horizontalschnitt durch die untere Kammer der Transformatorenstation mit gegenüber Fig. 7,15,23 gedrehtem Transformator;
- Fig. 26 bis 29:: den Fig. 5 bis 8 entsprechende Wiedergaben durch eine Transformatorenstation mit über der unteren Kammer vorgesehenem winkelförmigem Montage- oder Einbauelement, wobei Fig. 28 ein Schnitt entsprechend Linie XXVIII-XXVIII in Fig. 27 ist;
- Fig. 30 bis 33:: den Darstellungen der Fig. 26 bis 29 entsprechende Wiedergaben zu einem weiteren Ausführungsbeispiel;
- Fig. 34:: eine vergrößerte Schrägsicht auf ein Montageelement mit Mittelspannungschaltanlage, Niederspannungsverteilung und Transformator;
- Fig. 35, 36:: vertikale Längsschnitte durch zwei weitere Transformatorenstationen.

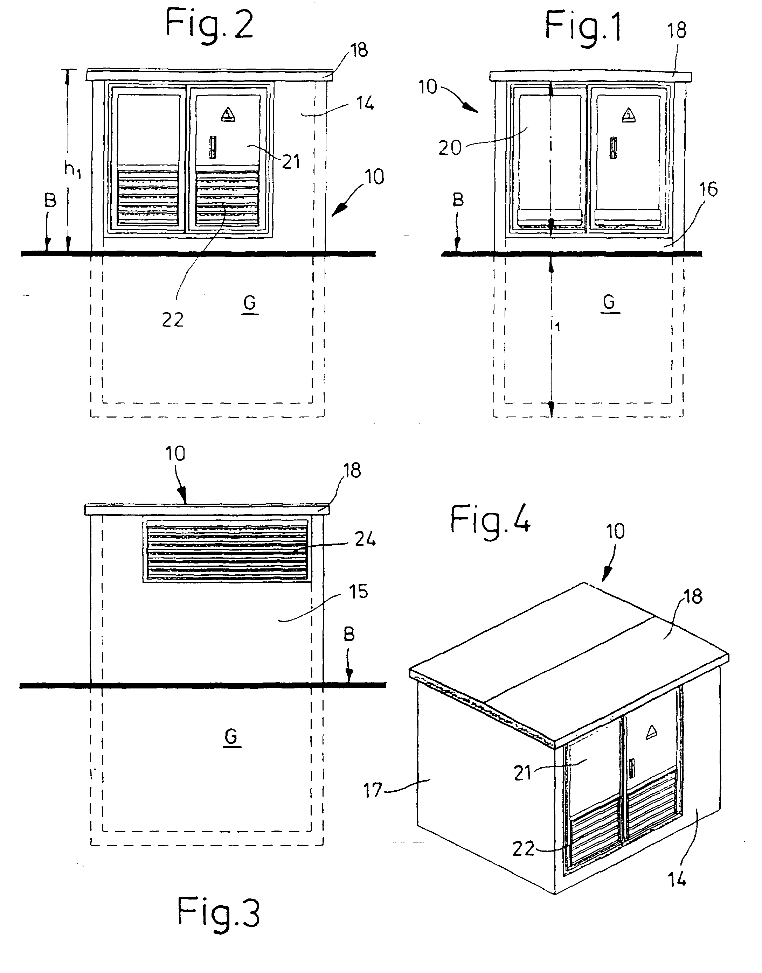

Eine quaderförmige Umspann- oder Transformatorenstation 10 der Länge a von hier 200 cm sowie der Breite b von 165 cm weist nach Fig. 1 bis 4 monolithisch an eine Bodenplatte 12 gegossene Seitenwände 14, 15 sowie eine Frontwand 16 und eine Rückwand 17 auf, zudem eine aufgesetzte Dachplatte 18.

Die Höhe h des monolithischen Körpers 12 bis 17 mißt etwa 290 cm bei einer maximalen Dicke e der Dachplatte 18 von 10 cm.

Die Frontwand 16 ist über ihre lichte Breite hinweg mit einer Flügeltür 20 ausgestattet, deren Höhe i die Einbautiefe der Transformatorenstation 10 im Baugrund G bestimmt; in diesen ist die Transformatorenstation 10 mit einer Einbautiefe i₁ unter der Rasenkante B eingelassen; über dieser erhebt sich das Bauwerk 10 mit einer freien Höhe h₁ von beispielsweise 155 bis 165 cm.

Auch die eine Seitenwand 14 bietet eine Flügeltüre 21 -mit mehreren Lüftungslamellen 22 -- an, die andere Seitenwand 15 nur ein dachnahes Lüftungsgitter 24.

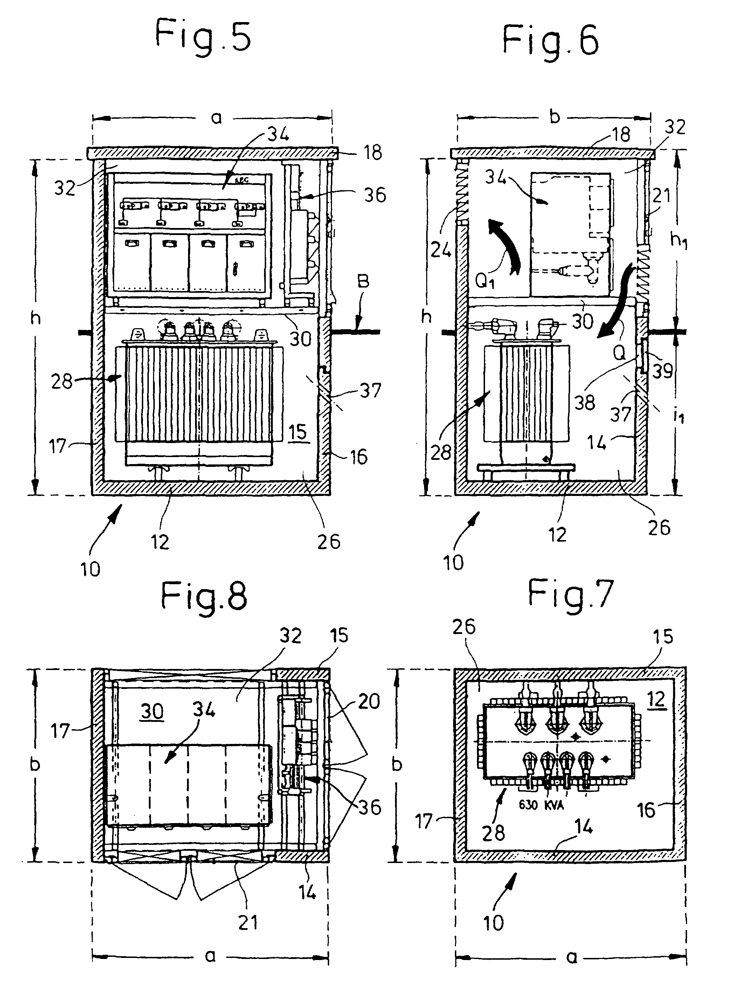

Vor allem die Fig. 5, 6 zeigen, daß der monolithische Körper 12 bis 16 übereinanderliegend einen Transformatorenraum 26 mit Transformator 28 und -- durch einen Zwischenboden 30 getrennt -- einen Spannungsraum 32 für eine Mittelspannungsschaltanlage 34 und eine Niederspannungsverteilung 36 anbietet.

Der Zwischenboden 30 muß ausreichend offen sein, um den Lufteinzug bzw. die Zirkulation -- siehe Pfeile Q bzw. Q₁ in Fig. 6 -- zu ermöglichen.

In der Seitenwand 14 der Fig. 6 ist unter dem Zwischenboden 30 über einer Kabeldurchführung 37 vor einer Durchgriffsöffnung 38 eine abdichtende, lösbare Platte 39 zu erkennen.

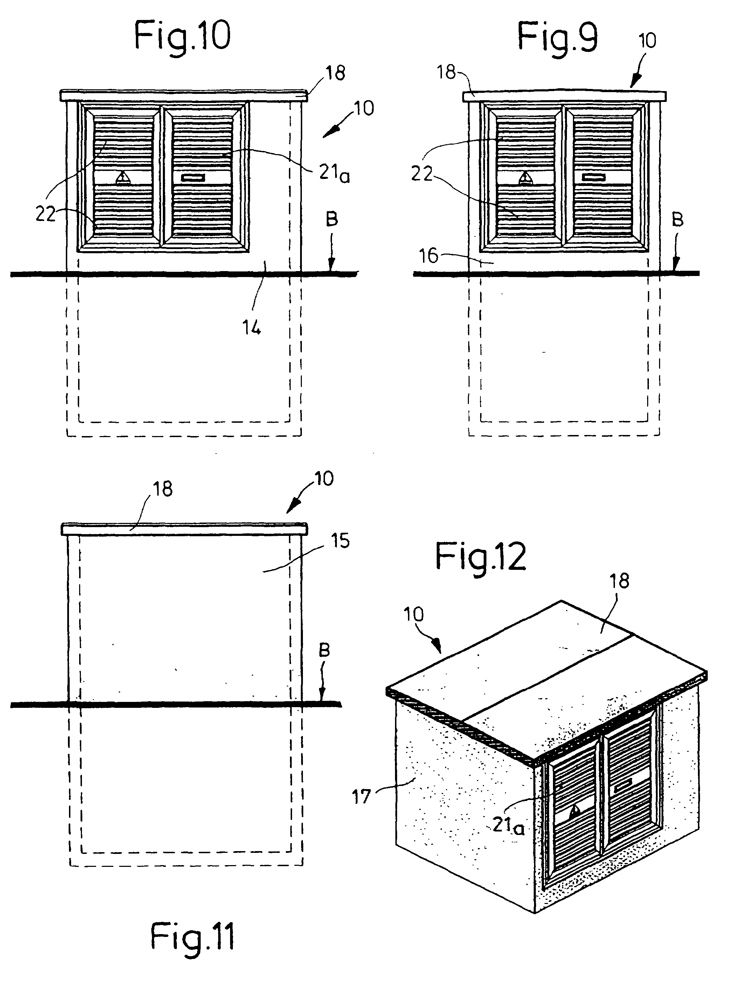

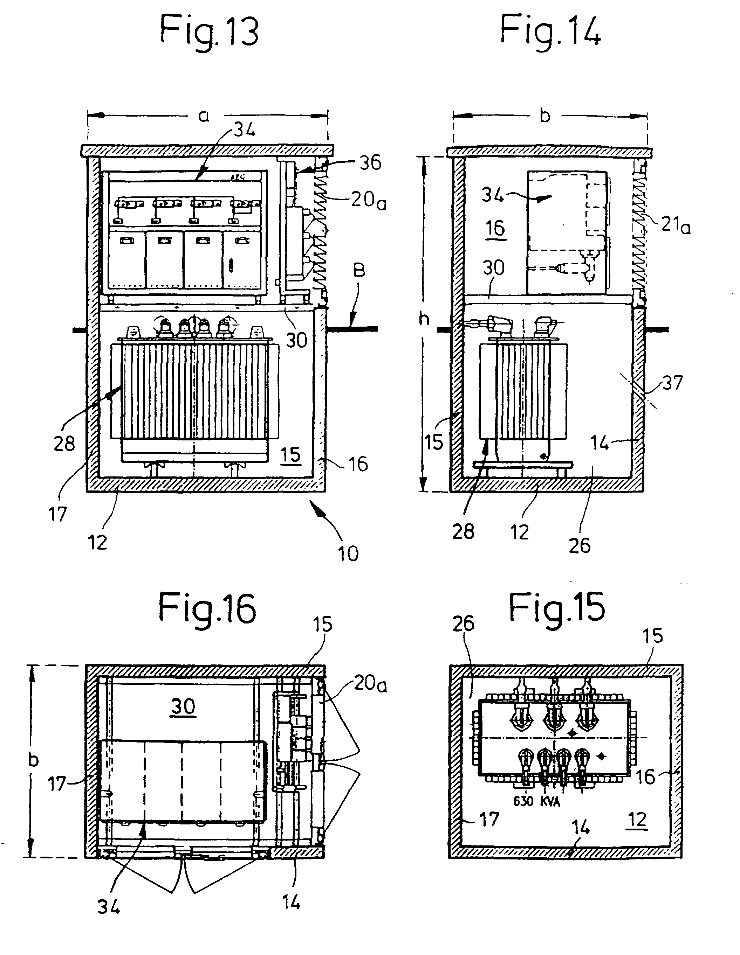

Bei der Ausgestaltung nach Fig. 9 bis 16 sind die Rückwand 17 sowie eine Seitenwand 15 geschlossen, die Flügeltüren 20ₐ bzw. 21ₐ von Frontwand 16 und Seitenwand 14 insgesamt mit Lüfterlamellen 22 ausgestattet.

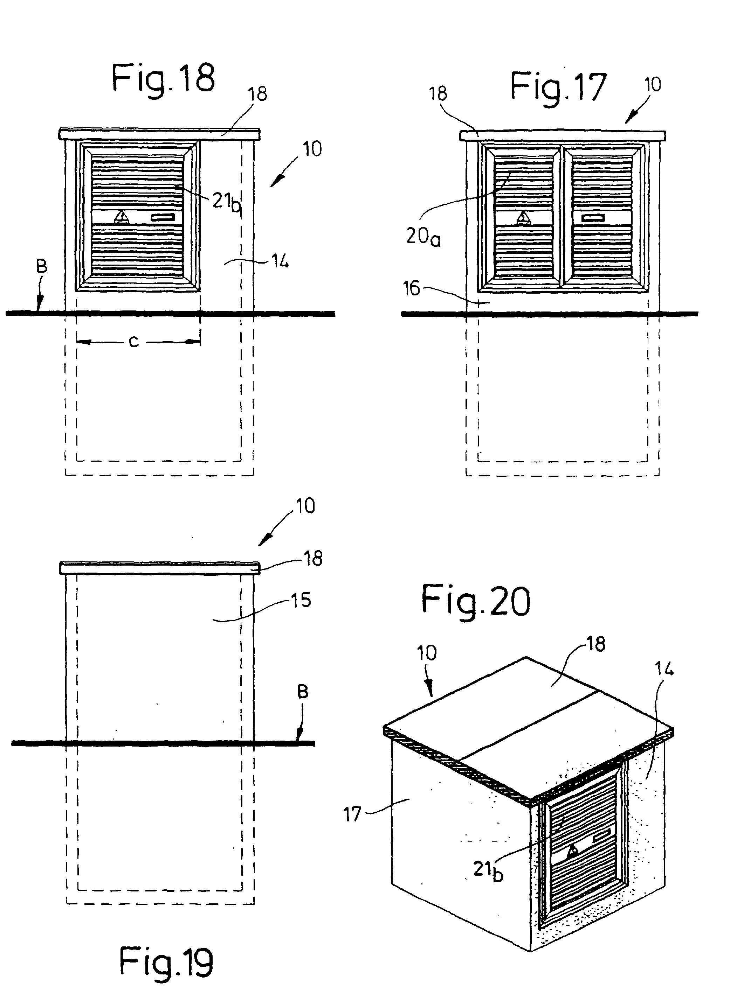

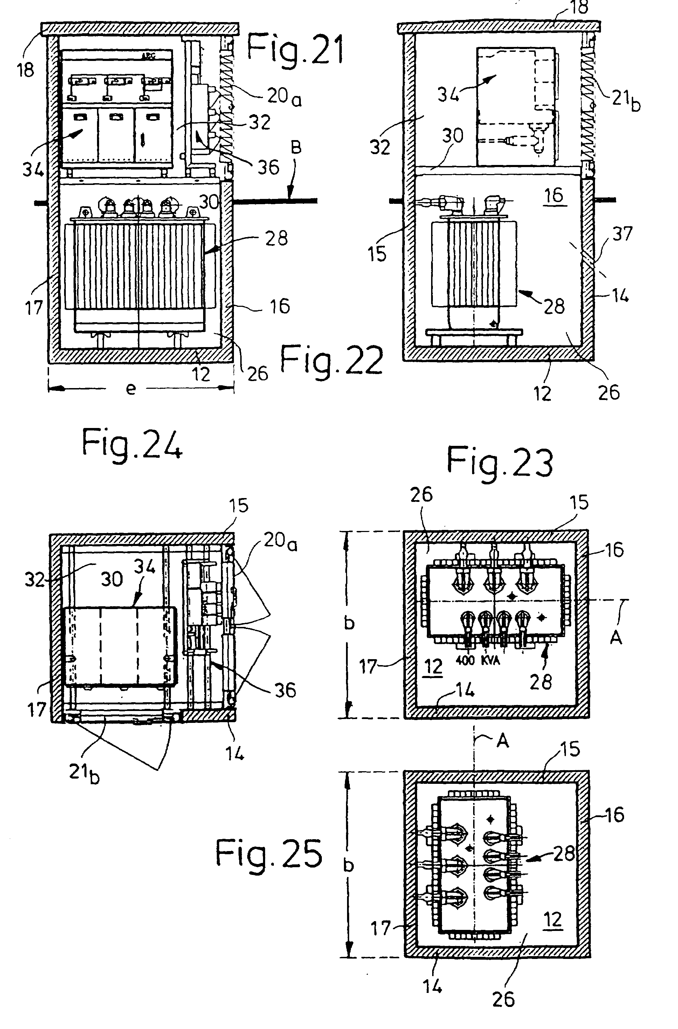

In den Fig. 18 bis 25 sind die jeweiligen Transformatorenstationen 10 mit a = 160 cm kürzer als breit (Breite b = 165 cm). Die schmale Seitenwand 14 enthält gemäß Fig. 18 eine einflügelige Lamellentür 21_{b} geringer Breite c. Im Unterschied zu den vorab beschriebenen Transformatoren 28 berührt jener nach Ausgestaltung der Fig. 25 mit seiner Längsachse A die Seitenwände 14, 15, ist also quer gestellt.

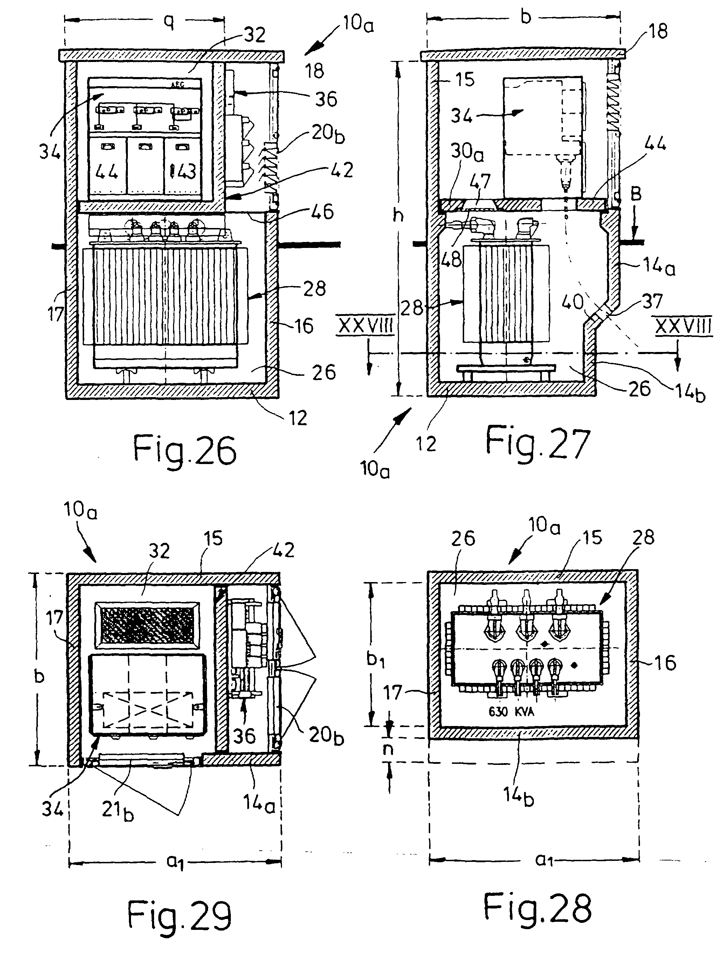

Die Transformatorenstationen 10ₐ der Fig. 26 bis 33 weisen jeweils eine Seitenwand 14ₐ auf, die etwa in halber Höhe des Transformatorenraums 26 unter Bildung eines pultartig geneigten Wandstreifens 40 nach innen gezogen ist; in dem pultartigen Wandstreifen 40 liegt die erwähnte Kabeldurchführung 37, unterhalb des Wandstreifens 40 einer Projektionsbreite n in einem lichten Abstand b₁ zur anderen Seitenwand 15 ein Sockelabschnitt 14_{b}.

Außerdem wird hier die -- gegen die von der Mittelspannungsschaltanlage 34 nach unten ausgestoßene Druckwelle druckfest konstruierte -- Zwischendecke i. w. von einem vorgefertigten Montage- oder Einbauelement 42 L-förmigen Querschnitts aus einem -- bis zur Dachplatte 18 reichenden -- Wandteil 43 und einem Bodenschenkel 44 gebildet. Der Bodenschenkel 44 der Länge q erstreckt sich nur über einen Teil der Stationenlänge a₁ von hier 180 cm und begrenzt mit der Frontwand 16 einen Durchgangsspalt 46. Ein weiterer Durchgangsspalt 47 ist im Zwischenboden 30ₐ der Fig. 27 zu erkennen, der sich als Düsenfenster aufwärts querschnittlich verjüngt sowie von einem Gitter 48 untergriffen wird. Durch das Düsenfenster 47 können die aus der Mittelspannungsschaltanlage 34 kommenden heißen Gase abgekühlt werden.

Bei dieser Ausführung wird die Zuluft über die mit Klappen versehene Niederspannungstür 20_{b} zugeführt; die Entlüftung erfolgt durch die Mittelspannungstür 21_{b}.

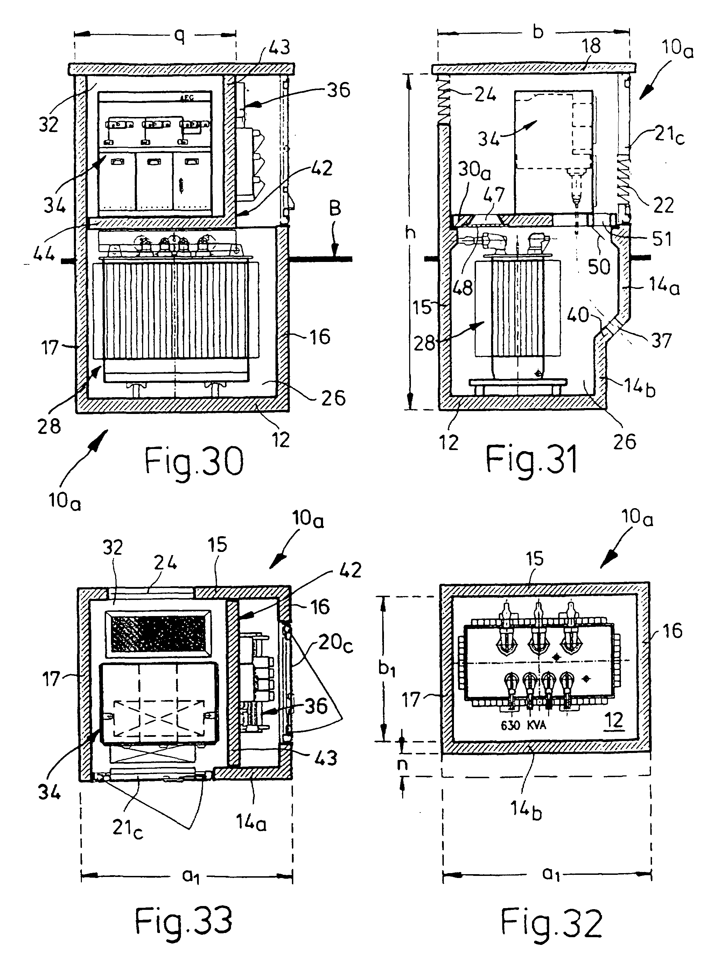

Bei der Ausführung nach Fig. 30 bis 32 erfolgt die Belüftung über die einflügelige Mittelspannungstür 21_{c} und eine am Zwischenboden 30ₐ angelenkte Klappe 50, die Entlüftung durch die Rückwand. Die Klappe 50 schließt im Überdruckfall einen ihr zugeordneten Durchbruch 51 des Zwischenbodens 30ₐ -- und damit den Transformatorenraum 26 störlichtbogenfrei -- ab.

Nicht dargestellt ist, daß der berstfeste Zwischenboden 30,30ₐ auf vorzugsweise vier Betonkonsolen aufgelegt und mit diesen verschraubt ist. Die Betonkonsolen sind monolithisch an das Bauwerk 10,10ₐ angegossen. Statt ihrer können auch Metallwinkel zur Verbindung von Bauwerk 10,10ₐ und Zwischenboden 30,30ₐ eingesetzt werden. Zudem bietet letzterer -- nicht wiedergegebene -- Aussparungen für Mittelspannungskabel sowie ein Niederspannungskabel an, die bevorzugt mittels verschraubbarer Holzdeckel auf einfache Weise verschlossen werden.

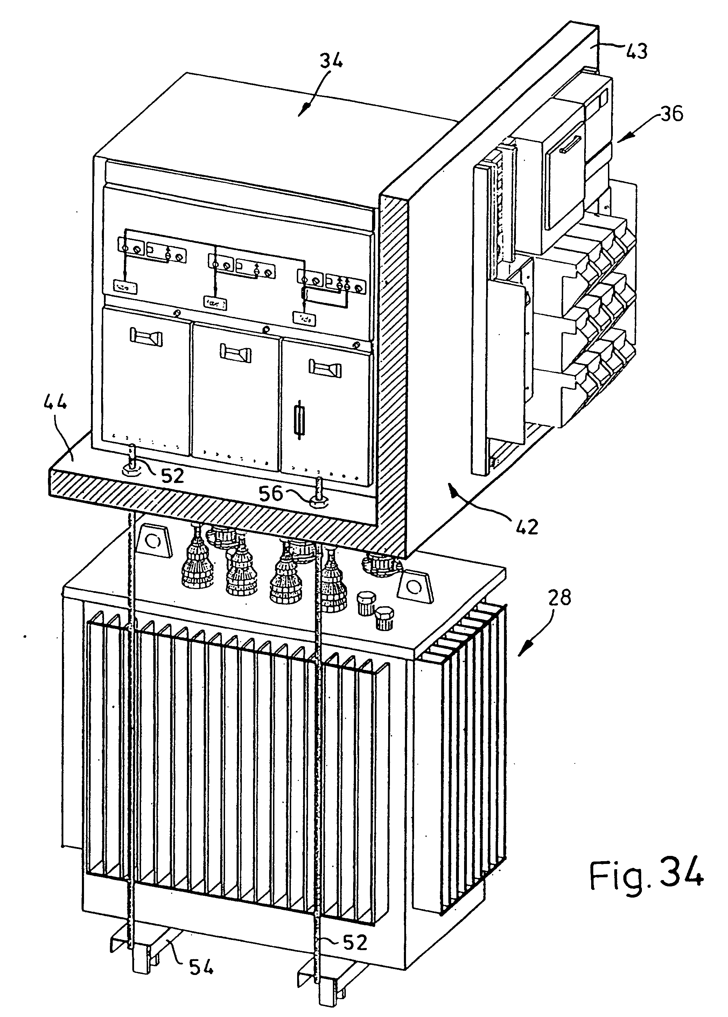

Fig. 34 läßt das Einbauelement 42 mit der aufstehenden Mittelspannungschaltanlage 34 und dem für den Transport untergehängten Transformator 28 deutlich werden; dieser wird an Tragstäben 52 und Bodenprofilen 54 gehalten; die Tragstäbe 52 durchsetzen den Bodenschenkel 44 jenes Einbauelements 42, das dazu mit nicht erkennbaren Durchsteckhülsen ausgestattet ist. Über diesen sind Haltemuttern 56 zu erkennen, mit denen die Wirklänge der Tragstäbe 52 bestimmt werden kann.

Diesem Einbauelement 42 werden werksseitig sowohl die Mittelspannungsschaltanlagen 34 und die Niederspannungsverteilung 36 aufmontiert als auch der -- mit diesen durch Kabel verbundene -- Transformator 28 untergehängt; diese Einheit wird vor dem Transport in das Bauwerk 10,10ₐ so eingebaut, daß der Transformator 28 der Bodenplatte 12 aufsitzt. Nicht verdeutlicht ist ein -- von der Mittelspannungsschaltanlage 34 abgedeckter -- Durchbruch für die Mittelspannungsanlage 34.

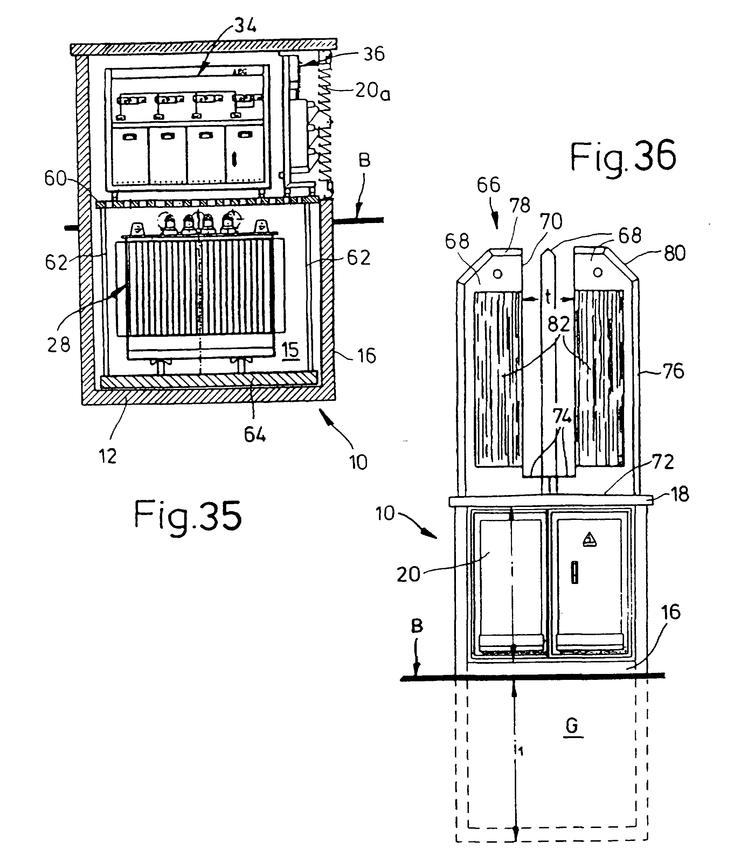

Schließlich bietet Fig. 35 eine Transformatorenstation 10 mit einem Tragrost 60 -- statt des beschriebenen Zwischenbodens 30, 30ₐ -- an. Dieser Tragrost 60 ist mittels seitlicher Stützstäbe oder Stützwände 62 an eine der Bodenplatte 12 aufliegende Tragplatte 64 angeschlossen; letztere bildet mit den Stützstäben /-wänden 62 und jenem die Mittelspannungsschaltanlage 34 sowie die Niederspannungsverteilung 36 haltenden Tragrost 60 eine Baueinheit. Auch hier erfolgt die Installation der elektrischen Anlagenteile 28, 34, 36 an der Einbaueinheit 60, 62, 64 bereits im Werk.

Die Transformatorenstation 10 der Fig. 36 dient als Sockel für einen Aufsatz, beispielsweise für einen auf ihre Dachplatte 18 aufgesetzten sog. Energiestern 66 aus vier -- ein grundrißliches Kreuz bildenden -- Platten 68, von denen jeweils zwei miteinander fluchten; deren einander zugekehrte Innenkanten 70 verlaufen zueinander in einem Abstand t.

Jede der Platten 68 ist in einem Abstand zur Plattenunterkante 72 einem schulterartigen Absatz 74 versehen, von dem jene Innenkante 70 ausgeht. Sowohl die Außenkante 76 als auch die Firstkante 78 der Platte 68 sind beidseits angefast, zudem ist die Ecke zwischen Außenkante 76 und Firstkante 78 bei 80 gebrochen. In der Platte 68 ist eine rechteckige strukturierte Vertiefungsfläche 82 vorgesehen, die an der Innenkante 70 endet. In den Beton der Platte 68 ist ein hier nicht erkennbarer Absorberkreislauf aus einer Rohrschlange eingebettet.

Ein solcher Energiestern 66 ist beispielhaft in DE-A-40 04 666 der Anmelderin beschrieben, auf deren Offenbarung hier Bezug genommen wird.

Nicht dargestellt ist in der Zeichnung -- neben anderen Aufsatzteilen wie von der Dachplatte 18 aufragenden Beleuchtungseinrichtungen, Plakatiereinrichtungen od.dgl. -eine Ausgestaltung, bei der die über der Rasenkante B befindlichen Abschnitte der Transformatorenstation 10, 10ₐ aus Metall, insbesondere eine Aluminiumlegierung, gefertigt sind.

## Patentansprüche

1. Elektrische Umspannstation mit wenigstens einen Transformator (28) sowie zumindest eine elektrische Schaltanlage (34, 36) aufnehmenden Räumen (26, 32) in einem Wände (14 bis 17) und eine diese verbindende Bodenplatte (12) aufweisenden quaderartig gegossenen Bauwerk (10, 10ₐ), bei dem in wenigstens einer der Wände (14, 16) eine Luftdurchtrittsöffnung (20, 21) untergebracht ist, der Transformator (28) in einem unterhalb eines Spannungsraumes (32) für die Schaltanlage/n (34, 36) vorgesehenen Transformatorenraum (26) frei angeordnet ist sowie sich zwischen Transformatorenraum (26) und Spannungsraum (32) in Abstand zum Transformator (28) eine Auflageeinrichtung (30, 30ₐ, 44, 60) erstreckt,
**dadurch gekennzeichnet,**
**dass** in dem Spannungsraum (32) des monolithisch gegossenen Bauwerks (10, 10ₐ) zumindest eine Mittelspannungsschaltanlage (34) und eine Niederspannungsverteilung (36) angeordnet sind sowie als Auflageeinrichtung ein den Transformatorenraum (26) überspannender, gebäudeseitig festgelegter Zwischenboden (30, 30ₐ, 44, 60) berstsicher ausgebildet und mit wenigstens einem Düsenfenster (47) nahe der Mittelspannungsschaltanlage (34) versehen ist, wobei die Luftdurchtrittsöffnung/en (20, 21) eine Einbautiefe (i₁) für die Umspannstation (10, 10ₐ) bestimmt/bestimmen.

2. Umspannstation nach Anspruch 1, **dadurch gekennzeichnet, dass** die Auflageeinrichtung als Zwischenboden (60) mit mehreren Düsenfenstern (47) ausgebildet und über eine Stützeinrichtung (62, 64) im Basisbereich des Transformators (28) gebäudeseitig festgelegt ist.

3. Umspannstation nach Anspruch 1, **dadurch gekennzeichnet, dass** der Zwischenboden (30, 30ₐ, 44, 60) oberhalb der Einbautiefe (i₁) für das Bauwerk (10, 10ₐ) angeordnet ist.

4. Umspannstation nach einem der Ansprüche 1 bis 3, **dadurch gekennzeichnet, dass** die Luftaustrittsöffnung (20, 20ₐ, 20_{b}; 21, 21ₐ, 21_{b}, 21_{c}) mit einem Lamelleneinsatz (22) versehen ist und/oder die Einbautiefe (i₁) ≤ 175 cm beträgt, bevorzugt höchstens 125 cm.

5. Umspannstation nach Anspruch 1, **dadurch gekennzeichnet, dass** sich der freie Querschnitt des Düsenfensters (47) vom Transformator (28) weg vermindert.

6. Umspannstation nach Anspruch 1 oder 5, **dadurch gekennzeichnet, dass** das Düsenfenster (47) von wenigstens einem Kühlgitter (48) durchgriffen und gegebenenfalls das Kühlgitter an Kabeldurchführungen anpassbar ausgebildet ist.

7. Umspannstation nach einem der Ansprüche 1 bis 6, **dadurch gekennzeichnet, dass** an den Zwischenboden (30, 30ₐ) wenigstens eine einen Durchbruch (51) verschließende Klappe (50) angelenkt und der Durchbruch einer Luftdurchtrittsöffnung (21_{c}) einer Wand (16) zugeordnet ist.

8. Umspannstation nach einem der Ansprüche 1 bis 7, **dadurch gekennzeichnet, dass** der berstfeste Zwischenboden (30, 30ₐ, 44) auf von Wänden (14 bis 17) des Bauwerks (10, 10ₐ) abragenden Einbauteilen ruht.

9. Umspannstation nach einem der Ansprüche 1 bis 8, **dadurch gekennzeichnet, dass** der Zwischenboden (30, 30ₐ, 44) auf Betonkonsolen aufgelegt ist, die monolithisch in das Bauwerk (10, 10ₐ) eingegossen sind.

10. Umspannstation nach einem der Ansprüche 1 bis 9, **dadurch gekennzeichnet, dass** der Zwischenboden (30, 30ₐ, 44) Aussparungen für den Anschluß von Mittelspannungskabeln und Niederspannungskabeln enthält.

11. Umspannstation nach Anspruch 10, **dadurch gekennzeichnet, dass** die Aussparung im Zwischenboden (30, 30ₐ, 44) für die Mittelspannungs- sowie die Niederspannungskabel druckfest abschließbar ist, insbesondere mittels verschraubbarer, an den Kabeldurchmesser anpaßbarer Abdeckplatten.

12. Umspannstation nach einem der Ansprüche 1 bis 11, **dadurch gekennzeichnet, dass** der Zwischenboden (44) Teil eines gesonderten Einbauelements (42) etwa rechtwinkeligen Längsschnittes ist und an den Zwischenboden ein Wandteil (43) zur Aufnahme der Niederspannungsverteilung (36) in jenem Winkel angeformt ist.

13. Umspannstation nach Anspruch 12, **dadurch gekennzeichnet, dass** das Wandteil (43) an die Innenseite einer auf die Wände aufgelegten Dachplatte (18) anschließt.

14. Umspannstation nach Anspruch 12, **dadurch gekennzeichnet, dass** der verkabelte Transformator (28) dem Zwischenboden (44) untergehängt ist und mit ihm eine Transporteinheit bildet.

15. Umspannstation nach einem der Ansprüche 12 bis 14, **dadurch gekennzeichnet, dass** den Zwischenboden (44) Tragstäbe (52) durchsetzen, die andernends mit den Transformator (28) untergreifenden Bodenprofilen (54) verbunden sind.

16. Umspannstation nach einem der Ansprüche 1 bis 15, **gekennzeichnet durch** eine oberhalb des Zwischenbodens (30, 30ₐ, 44) frontseitig angeordnete ein- oder mehrflügelige Stationstür (20, 20ₐ, 20_{b}), die der Niederspannungsverteilung (36) gegenüber angeordnet und mit Lüftungslamellen (22) versehen ist.

17. Umspannstation nach einem der Ansprüche 1 bis 16, **gekennzeichnet durch** eine oberhalb des Zwischenbodens (30, 30ₐ, 44) seitlich angeordnete ein- oder mehrflügelige Stationstür (21, 21ₐ, 21_{b}), die der Mittelspannungsschaltanlage (34) gegenüber angeordnet und mit Lüftungslamellen (22) versehen ist.

18. Umspannstation nach Anspruch 16 oder 17, **dadurch gekennzeichnet, dass** unterhalb der Mittelspannungstür (21, 21ₐ, 21_{b}) und der Niederspannungstür (20, 20ₐ, 20_{b}) lösbar eine abdichtbare Platte (39) vor einer Durchgriffsöffnung (38) angebracht ist.

19. Umspannstation nach einem der Ansprüche 1 bis 18, **gekennzeichnet durch** wenigstens ein dachnahes Lüftungsgitter (24) in einer Seitenwand (15).

20. Umspannstation nach einem der Ansprüche 1 bis 19, **dadurch gekennzeichnet, dass** die Bodenplatte (12) des seitlich und bodenwärts geschlossenen Transformatorenraumes (26) kürzer ist als der Zwischenbodenbereich und ein Wandteil (14_{b}) des Transformatorenraums unter Zwischenschaltung einer geneigten Pultfläche (40) an die darüber anschließende Wand (14ₐ) angefügt ist, die in Abstand (n) zum anderen Wandteil außerhalb dessen verläuft.

21. Umspannstation nach Anspruch 20, **dadurch gekennzeichnet, dass** in der geneigten Pultfläche (40) eine Kabeldurchführung (37) verläuft.

22. Umspannstation nach einem der Ansprüche 1 bis 21, **dadurch gekennzeichnet, dass** die oberhalb von deren Einbautiefe (i₁) vorgesehenen Bauwerksabschnitte zumindest teilweise aus metallischem Werkstoff gefertigt sind.

23. Umspannstation nach einem der Ansprüche 1 bis 22, **dadurch gekennzeichnet, dass** das Bauwerk (10, 10ₐ) Sockel- oder Basisteil für wenigstens ein Aufsatzteil (66) ist.

24. Umspannstation nach Anspruch 13, **dadurch gekennzeichnet, dass** von der Dachplatte (18) ein Energiestern (66) als Aufsatzteil aufragt.

## Claims

1. Electric substation comprising at least one transformer (28), as well as spaces (26, 32) in a wall (14 to 17) receiving at least one electric switchgear (34, 36) and a square cast structure (10, 10ₐ) having a floor slab (12) connecting these walls, in which an air passage (20, 21) is provided in at least one of the walls (14, 16), the transformer (28) is arranged freely in a transformer space (26) provided below a voltage space (32) for the switchgear/s (34, 36) and a bearing device (30, 30ₐ, 44, 60) extends between the transformer space (26) and the voltage space (32) at a distance from the transformer (28), **characterised in that** at least one medium-voltage switchgear (34) and one low-voltage distributor (36) are arranged in the voltage space (32) of the monolithically cast structure (10, 10ₐ) and a false floor (30, 30ₐ, 44, 60) serving as the bearing device spanning the transformer space (26) and fixed to the side of the building is burst-resistant and is provided with at least one nozzle window (47) close to the medium-voltage switchgear (34), the air passage/s (20, 21) determining a mounting depth (i₁) for the substation (10, 10ₐ).

2. Substation according to claim 1, **characterised in that** the bearing device is designed as a false floor (60) with a plurality of nozzle windows (47) and is fixed to the side of the building by means of a supporting device (62, 64) in the base region of the transformer (28).

3. Substation according to claim 1, **characterised in that** the false floor (30, 30ₐ, 44, 60) is arranged above the mounting depth (i₁) for the structure (10, 10ₐ).

4. Substation according to one of claims 1 to 3, **characterised in that** the air passage (20, 20ₐ, 20_{b}; 21, 21ₐ, 21_{b}, 21_{c}) is provided with a louvred insert (22) and/or the mounting depth (i₁) ≤ 175 cm, preferably no more than 125 cm.

5. Substation according to claim 1, **characterised in that** the free cross section of the nozzle window (47) decreases away from the transformer (28).

6. Substation according to claim 1 or claim 5, **characterised in that** the nozzle window (47) is traversed by at least one cooling grille (48) and the cooling grille may be designed in such a manner that it can be adapted to cable bushings.

7. Substation according to one of claims 1 to 6, **characterised in that** at least one flap (50) closing an opening (51) is hinged to the false floor (30, 30ₐ) and is associated with the opening of an air passage (21_{c}) in a wall (16).

8. Substation according to one of claims 1 to 7, **characterised in that** the burst-resistant false floor (30, 30ₐ, 44) rests on installation components projecting from walls (14 to 17) of the structure (10, 10ₐ).

9. Substation according to one of claims 1 to 8, **characterised in that** the false floor (30, 30ₐ, 44) is supported on concrete brackets cast monolithically into the structure (10, 10ₐ).

10. Substation according to one of claims 1 to 9, **characterised in that** the false floor (30, 30ₐ, 44) contains recesses for the connection of medium-voltage cables and low-voltage cables.

11. Substation according to claim 10, **characterised in that** the recess in the false floor (30, 30ₐ, 44) for the medium-voltage cables and the low-voltage cables can be closed in a pressure-resistant manner, in particular by means of screw-on cover plates which can be adapted to the cable diameter.

12. Substation according to one of claims 1 to 11, **characterised in that** the false floor (44) is part of a separate installation element (42) with a substantially square longitudinal section and a wall part (43) for receiving the low-voltage distributor (36) is moulded on to the false floor at the said angle.

13. Substation according to claim 12, **characterised in that** the wall part (43) is connected to the inner face of a roofing slab (18) placed on the walls.

14. Substation according to claim 12, **characterised in that** the cabled transformer (28) is suspended from the false floor (44) and forms a transport unit therewith.

15. Substation according to one of claims 12 to 14, **characterised in that** supporting bars (52) traverse the false floor (44) and are connected at their other ends to floor sections (54) engaging below the transformer (28).

16. Substation according to one of claims 1 to 15, **characterised by** a single-leaf or multi-leaf station door (20, 20ₐ, 20_{b}) arranged above the false floor (30, 30ₐ, 44) at the front, arranged opposite the low-voltage distributor (36) and provided with louvres (22).

17. Substation according to one of claims 1 to 16, **characterised by** a single-leaf or multi-leaf station door (21, 21ₐ, 21_{b}) arranged laterally above the false floor (30, 30ₐ, 44), arranged opposite the medium-voltage switchgear (34) and provided with louvres (22).

18. Substation according to claim 16 or claim 17, **characterised in that** a sealable plate (39) is removably mounted in front of a passage (38) below the medium-voltage door (21, 21ₐ, 21_{b}) and the low-voltage door (20, 20ₐ, 20_{b}).

19. Substation according to one of claims 1 to 18, **characterised by** at least one ventilation grille (24) in a side wall (15) close to the roof.

20. Substation according to one of claims 1 to 19, **characterised in that** the floor slab (12) of the transformer space (26) closed laterally and towards the floor is shorter than the false floor region and a wall part (14_{b}) of the transformer space is joined to the adjacent wall (14ₐ) extending at a distance (n) from the other wall part outside the latter with the interposition of an inclined surface (40).

21. Substation according to claim 20, **characterised in that** a cable bushing (37) extends along the inclined surface (40).

22. Substation according to one of claims 1 to 21, **characterised in that** the portions of the structure provided above its mounting depth (i₁) are made at least partially of metallic material.

23. Substation according to one of claims 1 to 22, **characterised in that** the structure (10, 10ₐ) is a base part for at least one attachment (66).

24. Substation according to claim 13, **characterised in that** an energy star (66) serving as an attachment projects from the roofing slab (18).

## Revendications

1. Poste de transformation électrique comportant au moins un transformateur (28) ainsi des locaux (26, 32) logeant au moins une installation de commutation électrique (34, 36), dans une construction (10, 10ₐ) coulée, parallélépipédique, présentant des parois (14 à 17) et une plaque de fond (12) reliant celles-ci, construction pour laquelle, en au moins l'une des parois (14, 16), est ménagée une ouverture de passage d'air (20, 21), le transformateur (28) étant disposé librement dans un local de transformateur (26) prévu au-dessous d'un local de tension (32) pour la ou les installation(s) de commutation (34, 36) ainsi qu'un dispositif de pose (30, 30ₐ, 44, 60) s'étendant entre le local de transformateur (26) et le local de tension (32) à distance du transformateur (28),
**caractérisé en ce que**,
- dans le local de tension (32) de l'ouvrage de construction (10, 10ₐ) coulé de façon monolithique, sont disposées au moins une installation de commutation moyenne tension (34) et une installation de distributeur basse tension (36), ainsi que, en tant que dispositif de pose, un fond intermédiaire (30, 30ₐ, 44, 60) est réalisé, offrant une sécurité contre le risque d'éclatement, fond fixés côté bâtiment, couvrant la surface du local de transformateur (26) et muni d'au moins une fenêtre du buses (47) placée à proximité de l'installation de commutation moyenne tension (34), la ou les ouverture(s) de passage d'air (20, 21) détermine/déterminent une profondeur d'enfouissement (i₁) du poste de transformation (10, 10ₐ)

2. Poste de transformation électrique selon la revendication 1, **caractérisé en ce que** le dispositif de pose est réalisé sous la forme de fond intermédiaire (60) avec une pluralité de fenêtres de buses (47) et est fixé côté bâtiment par l'intermédiaire d'un dispositif d'appui (62, 64), la fixation se faisant dans la zone de base du transformateur (28).

3. Poste de transformation électrique selon la revendication 1, **caractérisé en ce que** le fond intermédiaire (30, 30a, 44, 60) est disposé au-dessus de la profondeur d'enfouissement (i₁) de l'ouvrage de construction (10, 10ₐ).

4. Poste de transformation électrique selon l'une des revendications 1 à 3, **caractérisé en ce que** l'ouverture de sortie d'air (20, 20ₐ, 20_{b}; 21, 21ₐ, 21_{b}, 21_{c}) est munie d'un insert à lamelles (22) et/ou la profondeur d'enfouissement (i₁) est ≤ 175 cm, de préférence au maximum de 125 cm.

5. Poste de transformation électrique selon la revendication 1, **caractérisé en ce que** la section transversale libre de la fenêtre à buses (27) va en diminuant lorsqu'on s'écarte du transformateur (28).

6. Poste de transformation électrique selon la revendication 1 ou 5, **caractérisé en ce que** la fenêtre à buses (47) est traversée par au moins une grille de refroidissement (48) et la grille de refroidissement est réalisée le cas échéant de façon à pouvoir être adaptée à des passages de câble.

7. Poste de transformation électrique selon l'une des revendications 1 à 6, **caractérisé en ce que**, sur le fond intermédiaire (30, 30ₐ), est articulé au moins un volet (50) obturant un passage (51) et le passage est associé à une ouverture de passage d'air (21_{c}) d'une paroi (16).

8. Poste de transformation électrique selon l'une des revendications 1 à 7, **caractérisé en ce que** le fond intermédiaire (30, 30ₐ, 44) résistant au risque d'éclatement repose sur des parties de montage, faisant saillie des parois (14 à 17), de l'ouvrage de construction (10, 10ₐ).

9. Poste de transformation électrique selon l'une des revendications 1 à 8, **caractérisé en ce que** le fond intermédiaire (30, 30ₐ, 44) est posé sur des consoles en béton qui sont coulées de façon monolithique dans l'ouvrage de construction (10, 10ₐ).

10. Poste de transformation électrique selon l'une des revendications 1 à 9, **caractérisé en ce que** le fond intermédiaire (30, 30ₐ, 44) contient des évidements pour le raccordement de câbles moyenne tension et de câbles basse tension.

11. Poste de transformation électrique selon la revendication 10, **caractérisé en ce que** l'évidement ménagé dans le fond intermédiaire (30, 30ₐ, 44) est susceptible d'être obturé de façon étanche à la pression pour les câbles moyenne tension ainsi que les câbles basse tension, en particulier au moyen de plaques de recouvrement vissables, adaptables au diamètre de câble.

12. Poste de transformation électrique selon l'une des revendications 1 à 11, **caractérisé en ce que** le fond intermédiaire (44) fait partie d'un élément de montage (42) séparé, à coupe longitudinale à peu près à angle droit et, sur le fond intermédiaire, est formée dans l'angle, une partie de paroi (43) devant recevoir le dispositif de distribution basse tension (36).

13. Poste de transformation électrique selon la revendication 12, **caractérisé en ce que** la partie de paroi (43) se raccorde à la face intérieure d'un panneau de toiture (18) posé sur les parois.

14. Poste de transformation électrique selon la revendication 12, **caractérisé en ce que** le transformateur (28) câblé est accroché au-dessous du fond intermédiaire (44) et forme avec lui une unité de transport.

15. Poste de transformation électrique selon l'une des revendications 12 à 14, **caractérisé en ce que** des barres porteuses (52) traversent le fond intermédiaire (44), et sont reliées à l'autre extrémité à des profils de fond (54) saisissant par le dessous le transformateur (28).

16. Poste de transformation électrique selon l'une des revendications 1 à 15, **caractérisé par** une porte de poste (20, 20ₐ, 20_{b}) à un ou plusieurs battants disposés côté avant au-dessus du fond intermédiaire (30, 30ₐ, 44), porte de poste qui est disposée à l'opposé du dispositif de distribution (36) et est munie de lamelles d'aération (22).

17. Poste de transformation électrique selon l'une des revendications 1 à 16, **caractérisé par** une porte de poste (21, 21ₐ, 21_{b}) à un ou plusieurs battants, disposée au-dessus du fond intermédiaire (30, 30ₐ, 44), porte de poste disposée à l'opposé de l'installation de commutation moyenne tension (34) et munie de lamelles d'aération (22).

18. Poste de transformation électrique selon la revendication 16 ou 17, **caractérisé en ce qu'**une plaque (39) susceptible d'être fermée de façon étanche est montée devant une ouverture de passage (38), au-dessous de la porte moyenne tension (21, 21ₐ, 21_{b}) et de la porte basse tension (20, 20ₐ, 20_{b}).

19. Poste de transformation électrique selon l'une des revendications 1 à 18, **caractérisé par** au moins une grille d'aération (24) proche du toit, installée dans une paroi latérale (15).

20. Poste de transformation électrique selon l'une des revendications 1 à 19, **caractérisé en ce que** la plaque de fond (12) du local de transformateur (26), fermé sur le côté et côté fond, est plus courte que la zone de fond intermédiaire et une partie de paroi (14_{b}) du local de transformateur avec interposition d'une surface de pose de pupitre de commande (40) inclinée à laquelle est jointoyée la paroi (14ₐ) se raccordant pas le dessus qui s'étend à la distance (n) par rapport à l'autre partie de paroi à l'extérieur de celle-ci.

21. Poste de transformation électrique selon la revendication 20, **caractérisé en ce qu'**un passage à câbles (37) s'étend dans la surface de pose de pupitre (40) inclinée.

22. Poste de transformation électrique selon l'une des revendications 1 à 21, **caractérisé en ce que** les tronçons d'ouvrage de construction prévus au-dessus de leur profondeur d'enfouissement (i₁) sont fabriqués au moins partiellement en un matériau métallique.

23. Poste de transformation électrique selon l'une des revendications 1 à 22, **caractérisé en ce que** l'ouvrage de construction (10, 10ₐ) est une partie socle ou une partie de base pour au moins une partie de pose (66).

24. Poste de transformation électrique selon la revendication 13, **caractérisé en ce qu'**un organe d'énergie sous forme d'étoile (66) fait saillie à partir du panneau de toiture, à titre de partie d'installation.
